**Europäisches Patentamt**

**European Patent Office**

**Office européen des brevets**

(11) Veröffentlichungsnummer: **0 123 028**
**A1**

## EUROPÄISCHE PATENTANMELDUNG

(21) Anmeldenummer: **84101150.5**

(22) Anmeldetag: **04.02.84**

(51) Int. Cl.³: **B 23 D 47/04**
**B 23 Q 1/28**

(30) Priorität: **25.02.83 DE 3306743**

(43) Veröffentlichungstag der Anmeldung:
**31.10.84 Patentblatt 84/44**

(84) Benannte Vertragsstaaten:
**AT BE CH DE FR GB IT LI LU NL SE**

(71) Anmelder: **Chr. Eisele Maschinenfabrik GmbH & Co. KG.**
**Nürtinger Strasse 9 - 15**
**D-7316 Köngen(DE)**

(72) Erfinder: **Holder, Kurt**
**Kiesweg 24**
**D-7316 Köngen(DE)**

(74) Vertreter: **Hoeger, Stellrecht & Partner**
**Uhlandstrasse 14c**
**D-7000 Stuttgart 1(DE)**

(54) Kreissägemaschine.

(57) Die Erfindung bezieht sich auf eine Kreissägemaschine mit einem Maschinengestell (1), einer Werkstückauflage, einem rotierend angetriebenen Kreissägeblatt und mit einer Spanneinrichtung (5) zum Festspannen von Werkstücken auf der Werkstückauflage, wobei die Spanneinrichtung (5) am Maschinengestell (1) in einer Profilnut (16) und mittels eines in diese Nut (16) eingreifenden Nutensteins (15) relativ zum Kreissägeblatt (4) verschiebbar und festklemmbar ist. Um bei einer solchen Maschine die Spanneinrichtung (5) in einfacher Weise verstell- und fixierbar auszubilden, ist vorgesehen, daß der Nutenstein (15) mittels eines Exzenters (22) in der Profilnut (16) festklemmbar ist.

Fig. 4

EP 0 123 028 A1

HOEGER, STELLRECHT & PARTNER
PATENTANWÄLTE                    0123028
UHLANDSTRASSE 14 c  D 7000 STUTTGART

A 45 511 m
m - 192
22. Februar 1983

Anmelder: Chr. Eisele
Maschinenfabrik GmbH & Co. KG
Nürtinger Straße 9 - 15
7316 Köngen

B e s c h r e i b u n g :

Kreissägemaschine

Die Erfindung betrifft eine Kreissägemaschine mit
einem Maschinengestell, einer Werkstückauflage, einem
rotierend angetriebenen Kreissägeblatt und mit einer
Spanneinrichtung zum Festspannen von Werkstücken auf
der Werkstückauflage, wobei die Spanneinrichtung am
Maschinengestell in einer Profilnut und mittels eines
in diese Nut eingreifenden Nutensteins relativ zum
Kreissägeblatt verschiebbar und festklemmbar ist.

Bei bekannten Maschinen dieser Art weist die Spanneinrichtung einen verhältnismäßig langen Nutenstein
auf, der durch zwei am ortsfesten Teil der Spanneinrichtung vorgesehene Klemmschrauben in der Profilnut
festgeklemmt wird. Da es häufig erforderlich ist, die
Spanneinrichtung zu verstellen, beispielsweise wenn
mit der Sägemaschine Gehrungsschnitte ausgeführt oder
Längsschlitze gesägt werden müssen, ist es erforderlich, jedesmal die beiden Klemmschrauben zu lösen,
die Spanneinrichtung neu einzustellen und die Klemmschrauben anschließend wieder festzuziehen. Dies

A 45 511 m
m - 192
22. Februar 1983

ist ein umständlicher und zeitraubender Arbeitsvorgang. Außerdem ist bei der bekannten Maschine wenigstens eine der Klemmschrauben dann schlecht zugänglich, wenn an der Spanneinrichtung einseitig Zusatzteile, z. B. ein zweiter Spannarm, befestigt sind.

Es ist Aufgabe der Erfindung, den geschilderten
Mängeln abzuhelfen und eine gattungsgemäße Kreissägemaschine so auszubilden, daß die Spanneinrichtung
einfach und schnell eingestellt und festgeklemmt
werden kann.

Die Aufgabe wird erfindungsgemäß dadurch gelöst, daß
der Nutenstein mittels eines Exzenters in der Profilnut festklemmbar ist.

Die nachstehende Beschreibung einer bevorzugten Ausführungsform der Erfindung dient im Zusammenhang mit
beiliegender Zeichnung der weiteren Erläuterung. Es
zeigen:

    Fig. 1    eine Ansicht einer Kreissägemaschine
             mit Spanneinrichtung;

    Fig. 2    eine Schnittansicht der Spanneinrichtung;

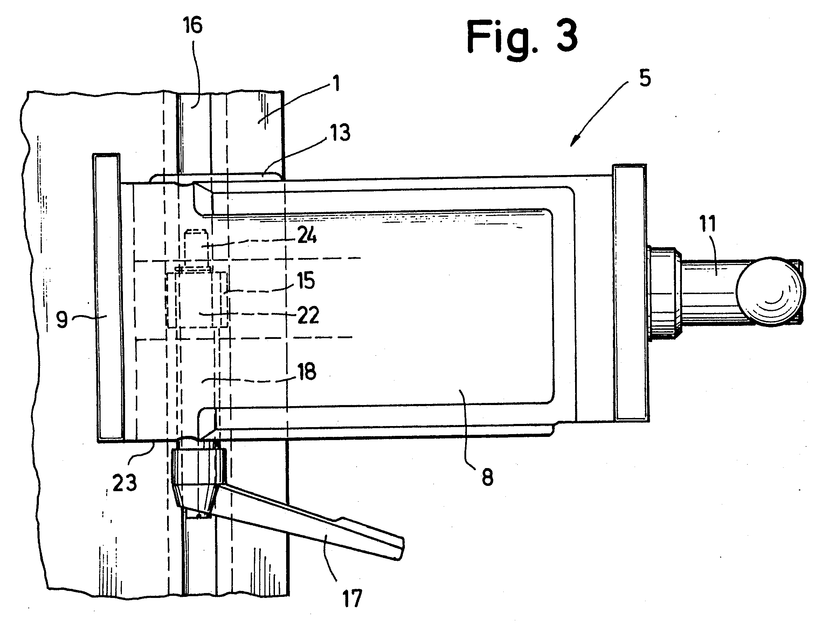

    Fig. 3    eine Draufsicht in Richtung des
             Pfeiles A in Fig. 2;

A 45 511 m
m - 192
22. Februar 1983

Fig. 4          eine Schnittansicht entlang der
               Linie 4-4 in Fig. 2 und

Fig. 5          eine Schnittansicht entlang der
               Linie 5-5 in Fig. 4.

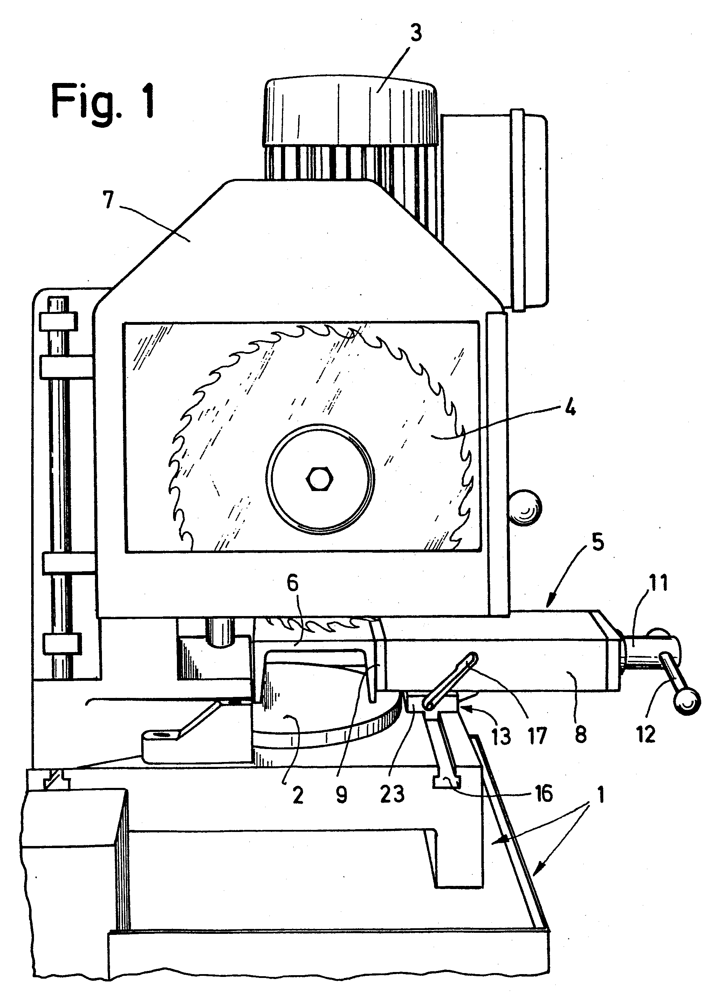

Die in Fig. 1 im wesentlichen nur schematisch dargestellte Kreissägemaschine weist ein Maschinengestell
1, eine Werkstückauflage 2, ein rotierend von einem
Motor 3 angetriebenes Kreissägeblatt 4 und eine Spanneinrichtung 5 zum Festspannen eines Werkstückes 6
auf der Werkstückauflage 2 auf. Das Kreissägeblatt 4
ist in herkömmlicher Weise von einem Schutzkasten 7
abgedeckt und kann in einer Führung gemeinsam mit dem
Motor 3 auf- und abbewegt werden, so daß das rotierende
Sägeblatt 4 den gewünschten Schnitt im Werkstück 6
ausführt. Bei der in Fig. 1 dargestellten Anordnung
wird das Werkstück 6 senkrecht zu seiner Längsachse
zersägt. Das Sägeblatt 4 ist jedoch bei der dargestellten Maschine einschließlich seiner Lagerung und
seines Antriebsmotors 3 auch derart verstellbar, daß
am Werkstück 6 Gehrungsschnitte in einem von $90^{\circ}$
verschiedenen Winkel ausgeführt oder längsachsparallele
Schlitze eingesägt werden können. Hierzu ist die
Sägeblattanordnung um eine senkrecht zur Werkstückauflage 2 verlaufende Achse in an sich bekannter und
deshalb nicht eigens beschriebener Weise drehbar.

A 45 511 m
m - 192
22. Februar 1983

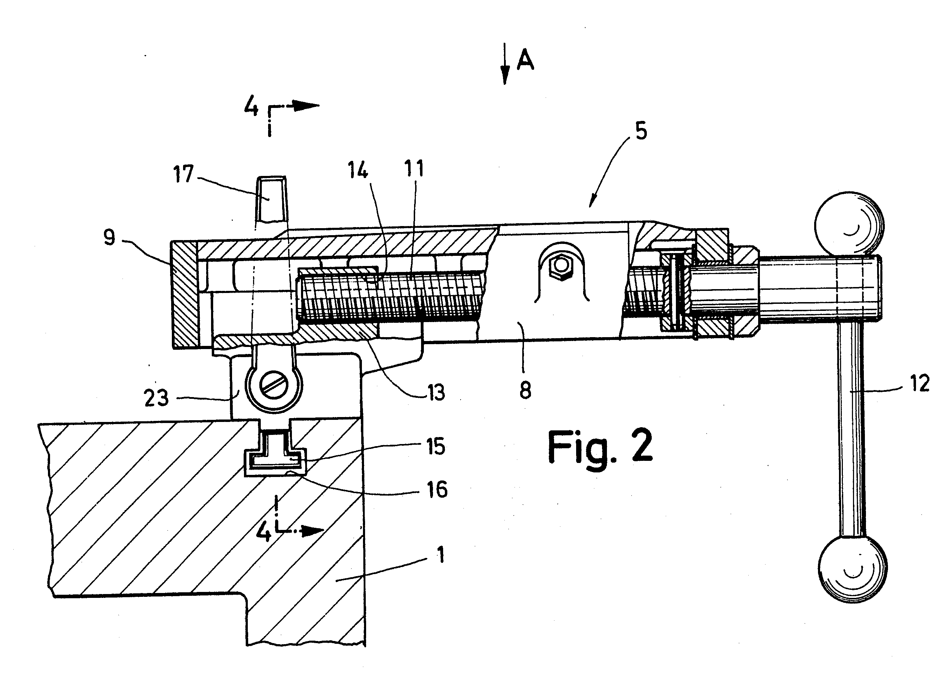

Die Spanneinrichtung 5 (vgl. insbesondere Fig. 2)
umfaßt in herkömmlicher Weise einen hohl ausgebildeten
Spannarm 8 mit einer am Werkstück 6 angreifenden
Anschlagplatte 9. Im Innern des Spannarms 8 ist eine
Schraubspindel 11 drehbar und axial unverschieblich
gelagert. Die Schraubspindel 11 ragt mit ihrem einen
Ende über den Spannarm 8 hinaus und weist dort den
üblichen, querverschieblichen Betätigungsarm 12 auf.

Der Spannarm 8 ist in bekannter Weise auf einem Spannblock 13 gleitverschieblich gelagert. Das dem Arm 12
gegenüberliegende Ende der Schraubspindel 11 greift
in ein Innengewinde 14 des Spannblocks 13 ein. Wenn
somit die Schraubspindel 11 verdreht wird, verschiebt
sich der Spannarm 8 relativ zum orstfest gehaltenen
Spannblock 13, um auf diese Weise das Werkstück 6
gegen ein der Anschlagplatte 9 gegenüberliegendes
Teil des Maschinengestells 1 zu klemmen.

Der Spannblock 13 ragt mit einem beweglich angeordneten Nutenstein 15 in eine zum Querschnittsprofil
dieses Steines komplementär ausgebildete Nut 16 im
Maschinengestell 1 hinein. Nutenstein 15 und Nut 16
können, wie dargestellt, ein T-Profil aufweisen, sie
könnten jedoch auch mit dem üblichen schwalbenschwanzförmigen oder einem anderen Querschnittsprofil versehen sein. Der Nutenstein 15 kann mittels eines
drehbar am Spannblock 13 gelagerten Klemmhebels 17
(in Fig. 2 nach oben) verschoben werden, so daß er
in der Nut 16 verklemmt ist. Hierdurch ist der an

A 45 511 m
m - 192
22. Februar 1983

sich auf dem Maschinengestell 1 verschiebliche Spannblock 13 in der gewünschten Lage fixierbar.

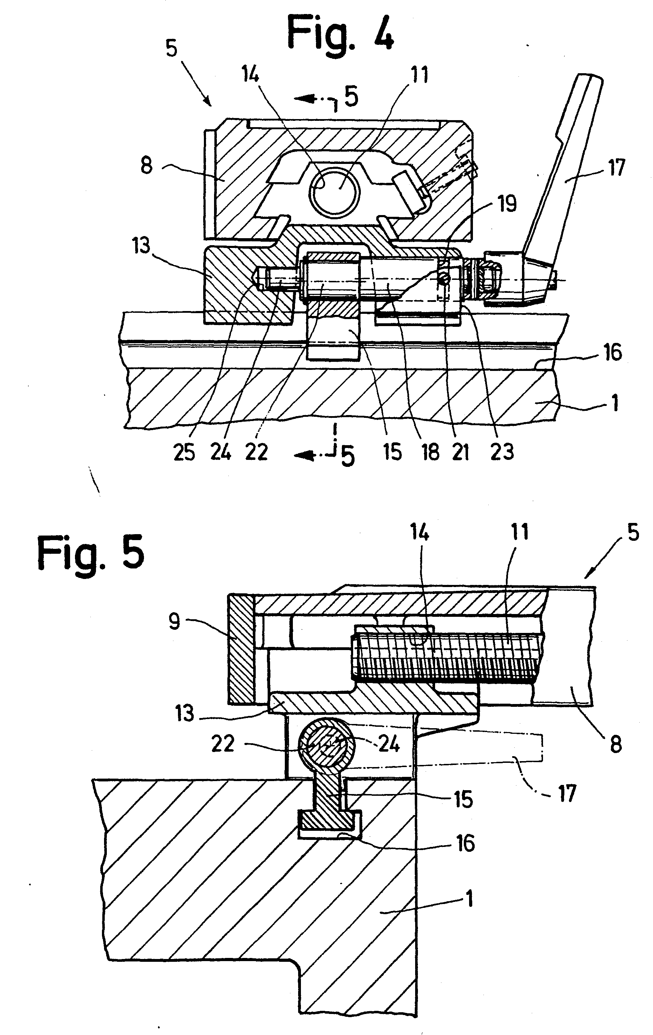

Wie insbesondere aus Fig. 4 und 5 hervorgeht, ist der
Klemmhebel 17 starr mit einer drehbar im Spannblock
13 gelagerten Welle 18 verbunden. Die Welle 18 verläuft parallel zur Nut 16 und ist mittels einer Nut
19 und einer in diese eingreifende, am Spannblock 13
festgelegten Schraube 21 axial unverschiebbar. Die
Welle 18 ist im Bereich des Nutensteins 15 als Exzenterscheibe 22 ausgebildet. Die Achse der Welle 18
und der Exzenterscheibe 22 sind in der in Fig. 4
strichpunktiert dargestellten Weise zueinander versetzt. Auf der Exzenterscheibe 22 ist der eine entsprechende Bohrung aufweisende Nutenstein 15 (Fig. 5)
drehbar gelagert. Wird über den Klemmhebel 17 die
Welle 18 und damit die Exzenterscheibe 22 verdreht,
so wird der Nutenstein 15 fest gegen die Oberseite
der Nut 16 angelegt, wodurch der Spannblock 13 und
damit die Spanneinrichtung 5 am Maschinengestell 1
fixiert ist (Fig. 5). Bei einer Verdrehung des Klemmhebels 17 in entgegengesetzter Richtung löst sich
der Nutenstein 15 von der Oberseite der Nut 16, so
daß nunmehr die Spanneinrichtung 5 verstellt und
anschließend erneut festgeklemmt werden kann.

Wie dargestellt, ist der Spannhebel 17 an einer quer
zur Nut 16 verlaufenden Stirnfläche 23 des Spannblocks 13 angeordnet. Die gegenüberliegende Stirnfläche des Spannblocks 13 ist frei, so daß dort

A 45 511 m
m - 192
22. Februar 1983

Zusatzteile, beispielsweise ein zweiter Spannarm,
angeordnet werden können. Wie am besten aus Fig. 4
ersichtlich, erstreckt sich die den Nutenstein 15
tragende Welle 18 in Form einer Verlängerung 24 über
den Nutenstein 15 hinaus und ist mit dieser Verlängerung 24 in einer entsprechenden Bohrung 25 des Spannblocks 13 drehbar gelagert. Somit ist der Nutenstein
15 an zwei Seiten durch die Welle 18 abgestützt. Bei
einer anderen Ausführungsform der Erfindung braucht
die Welle 18 nicht über den Nutenstein 15 hinaus
verlängert zu sein. In diesem Fall ist der Nutenstein
freitragend auf dem als Exzenterscheibe ausgebildeten
Teil der Exzenterwelle 18 drehbar gelagert.

A 45 511 m
m - 192
22. Februar 1983

Anmelder: Chr. Eisele
Maschinenfabrik GmbH & Co. KG
Nürtinger Straße 9 - 15
7316 Köngen

Patentansprüche :

1. Kreissägemaschine mit einem Maschinengestell, einer Werkstückauflage, einem rotierend angetriebenen Kreissägeblatt und mit einer Spanneinrichtung zum Festspannen von Werkstücken auf der Werkstückauflage, wobei die Spanneinrichtung am Maschinengestell in einer Profilnut und mittels eines in diese Nut eingreifenden Nutensteins relativ zum Kreissägeblatt verschiebbar und festklemmbar ist, dadurch gekennzeichnet, daß der Nutenstein (15) mittels eines Exzenters (22) in der Profilnut (16) festklemmbar ist.

2. Kreissägemaschine nach Anspruch 1, dadurch gekennzeichnet, daß der Exzenter (22) als Scheibe ausgebildet ist und exzentrisch auf einer Exzenterwelle (18) sitzt, die mit einem Klemmhebel (17) drehbar ist.

3. Kreissägemaschine nach Anspruch 2, dadurch gekennzeichnet, daß die Exzenterwelle (18) beidseitig des Nutensteins (15) in einem Spannblock (13) der Spanneinrichtung (5) gelagert ist.

0123028

A 45 511 m
m - 192
22. Februar 1983

4. Kreissägemaschine nach Anspruch 2, dadurch gekennzeichnet, daß der Nutenstein (15) an der Exzenterwelle (18) freitragend gelagert ist.

0123028

Fig. 1

Fig. 2

Fig. 3

# Fig. 4

# Fig. 5

# EUROPÄISCHER RECHERCHENBERICHT

Europäisches Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | CH-A- 386 208 (C. EISELE KG) <br> * Seite 2, Zeilen 1-27; Figur 1 * | 1 | B 23 D 47/04 <br> B 23 Q 1/28 |
| Y | DE-C- 801 486 (G. BOLEY) <br> * Seite 2, Zeilen 22-53, 88-96; Figur 5 * | 1 | |
| A | | 3 | |
| A | US-A-2 607 105 (H. BARKUS) <br> * Spalte 3, Zeilen 1-8; Figur 5 * | 1,3 | |
| A | CH-A- 375 969 (C. EISELE KG) <br> * Seite 2, Zeilen 97-109; Figuren 6-8 * | 1 | |
| A | US-A-4 219 910 (L. KRUSKA et al.) <br> * Figuren 1-3; Referenz 20 * | 2,4 | |

RECHERCHIERTE SACHGEBIETE (Int. Cl. 3)

B 23 B 23/00
B 23 D 45/14
B 23 D 47/00
B 23 Q 1/28
B 27 B 5/24
F 16 B 2/18

Der vorliegende Recherchenbericht wurde für alle Patentansprüche erstellt.

| Recherchenort | Abschlußdatum der Recherche | Prüfer |
|---|---|---|
| BERLIN | 25-05-1984 | MARTIN A E W |